# EUROPEAN PATENT APPLICATION

(11) **EP 3 255 455 A1**
(43) Date of publication of application: **13.12.2017**
(21) Application number: 17174537.5
(22) Date of filing: 06.06.2017
(51) Int. Cl.: G01S 17/02, G01S 17/89, H04N 13/02

(54) **SINGLE PULSE LIDAR CORRECTION TO STEREO IMAGING**

(30) Priority: 06.06.2016 US 201615173807
(71) Applicant: Goodrich Corporation, Charlotte, NC 28217-4578 (US)
(72) Inventor: LANE, Richard Norris, Westford, MA 01886 (US); HUMPHREY, Ian Peter, Foxboro, MA 02035 (US)
(74) Representative: Chiva, Andrew Peter

(57) **Abstract**

An apparatus for determining a distance to a target area, including at least one imaging system configured to provide at least two images of a target area, the images being associated with different imaging axes for forming a stereo image of the target area. The apparatus also includes a Lidar system including at least one laser configured to direct an optical beam to the target area and an optical detection system configured to receive a portion of the optical beam from the target area and establish a distance to the target area based on the received portion.

## Description

### FIELD

The present disclosure relates to imaging and ranging, and more particularly to stereo imaging and the like.

### BACKGROUND

Range to a specified area can be calculated using stereo imagery. With small angular separation between image capture locations, small errors in the measured angle and baseline will propagate to significant errors in the range estimate. A bigger angular separation can reduce the error. However, this takes longer to collect the two images, e.g., for a platform moving to provide the angular separation.

Conventional methods and systems have generally been considered satisfactory for their intended purpose. However, there is still a need in the art for improved systems that allow for improved stereo imaging and ranging. The present disclosure provides a solution for this need.

### SUMMARY

An apparatus for determining a distance to a target area includes at least one imaging system configured to provide at least two images of a target area, the images being associated with different imaging axes for forming a stereo image of the target area. The apparatus also includes a Lidar system including at least one laser configured to direct an optical beam to the target area and an optical detection system configured to receive a portion of the optical beam from the target area and establish a distance to the target area based on the received portion.

The at least one laser can emit a single pulse laser beam to the target area.

The apparatus can also include an image processor coupled to the imaging system and laser system connected to a memory. The memory can include instructions recorded thereon that, when read by the processor, cause the processor to receive the at least two images of the target area, receive the portion of the laser beam from the target area, and determine an imaging range to multiple points in the target area based on the at least two images and a laser range to the target area based on the received portion of the laser beam.

The processor can be configured to correlate the imaging range to the multiple points in the target area with the laser range to the target area. The processor can be configured to correct one or more errors in a stereo pair parallax angle or baseline positions of the at least two images based on the correlation.

The imaging system can include a camera configured to produce a first image associated with a first axis at a first time and a second image associated with a second axis at a second time. The Lidar system can be co-aligned with the at least one imaging system. The at least one imaging system and the Lidar system can be mounted to a space borne system.

A method for determining distance to a target area includes receiving two images of a target area, wherein the two images are taken at different imaging axes for stereo imaging, directing an optical beam from a Lidar system to the target area, and receiving a portion of the optical beam from the target area to establish an estimate of a target distance based on the received portion to extend the range accuracy of the stereo imaging.

Directing the optical beam can include directing a single pulse optical beam emitted by a laser of the Lidar system.

The method can also include determining an imaging range to multiple points in the target area based on the at least two images and a laser range to the target area based on the received portion of the optical beam.

The method can also include correlating the imaging range to the multiple points in the target area with the laser range to the target area.

The method can also include correcting one or more errors in a stereo pair parallax angle or baseline positions of the at least two images based on the correlation.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
FIG. 1 is a schematic view of an exemplary embodiment of an apparatus constructed in accordance with the present disclosure, showing an imaging system co-aligned with a Lidar system;
FIG. 2 is a schematic view of portion of the imaging and Lidar systems of FIG. 1, directed to a target area; and
FIG. 3 is a schematic view of an example of two images taken of the same area with a single-pulse Lidar sample within the range of the two images.

### DETAILED DESCRIPTION

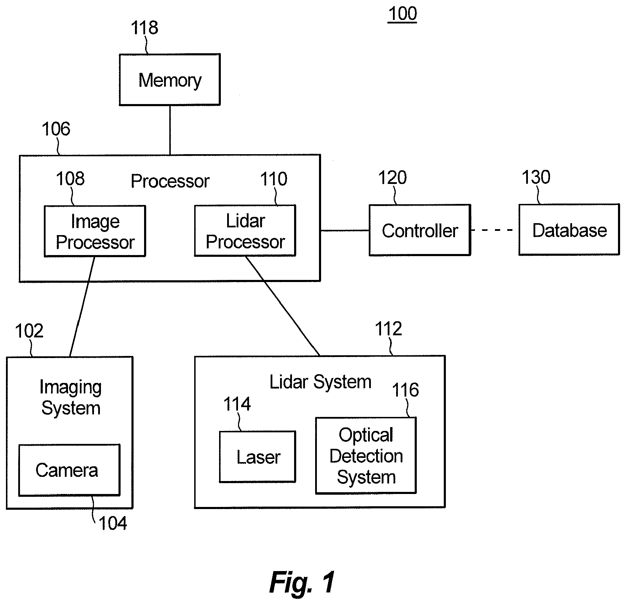

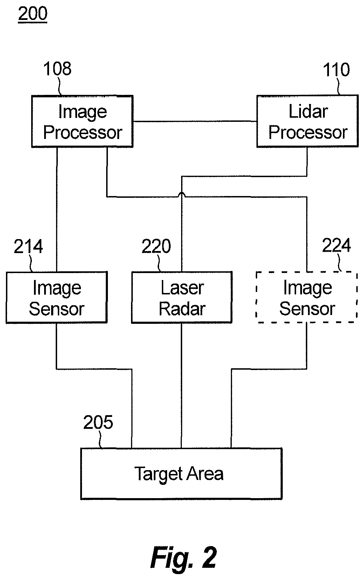

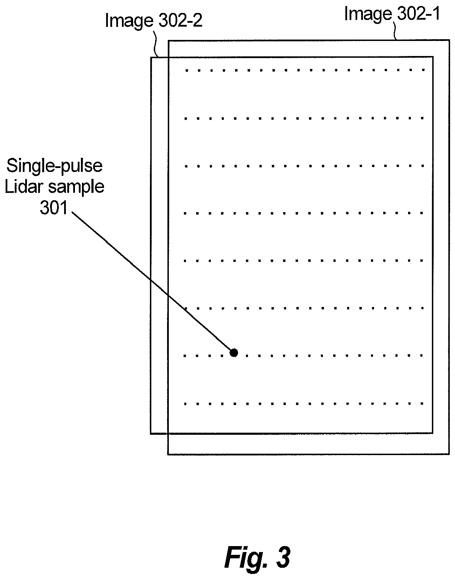

Reference will now be made to the drawings wherein like reference numerals identify similar structural features or aspects of the subject disclosure. For purposes of explanation and illustration, and not limitation, a partial view of an exemplary embodiment of an apparatus for stereo imaging and correcting stereo pair parallax angle using single-pulse Lidar in accordance with the disclosure is shown in FIG. 1 and is designated generally by reference character 100. Other embodiments of the apparatus in accordance with the disclosure, or aspects thereof, are provided in FIGS. 2 and 3, as will be described.

Lidar (light detection and ranging) uses laser technology to make precise distance measurements over long or short distances. One application of Lidar is the range scanner, or scanning Lidar. Lidar transceivers operate on the principle of transmitting laser light that then reflects off of a given object and returns to a Lidar receiver. The distance to an object is then determined by analyzing the laser signal through various techniques. During the scanning process, the Lidar makes repeated range measurements to objects in its path. Through repeated measurements of an object by individual laser transmissions, the shape of the object can be determined. The resulting range data is collected and serves as a rough model of the scanned area. However, the use of Lidar is significantly limited when power is limited.

There are situations where Lidar scanning has disadvantages. One example is when the use of full scanning Lidar requires prohibitive amounts of power, such as when power is very limited (e.g., in space). Another example is when full scanning Lidar is prohibitively risky due to the increased exposure to detection. In such applications, the conventional methods dictate use of a passive means of range measurement such as stereo imaging. However, this comes with a tradeoff since in stereo imaging with small angular separation; errors in the measured angle and baseline will propagate to significant errors in the range estimate. This results in requiring a bigger angular separation to reduce the error. The conventional approach is therefore to take longer time to increase the angular separation, e.g., by movement of the imaging platform.

Embodiments herein provide methods and systems having an imaging system for space which includes a co-aligned Lidar system configured to emit an occasional single pulse from the Lidar emitter. The accuracy of the range from the stereo pair images obtained using the imaging system can be improved using the single pulse of the Lidar sample, and the amount of fore and aft look required from the imaging system to achieve the same accuracy can be reduced relative to a system/method without the Lidar correction. The time to obtain accurate stereo imaging is reduced compared to purely passive techniques, and the power required and exposure to detection are considerably reduced compared to traditional active Lidar techniques.

Referring to the figures, FIG. 1 is a schematic view of an apparatus 100 that includes an imaging system and a Lidar system. The apparatus can be used, for example, on an aircraft or a spacecraft designed to scan a target area while in motion relative to the target area. The Lidar system includes a laser 114 configured to deliver a laser/optical beam, e.g., a single pulse optical beam, to a target area and an optical detection system 116 configured to receive a portion of the single pulse optical beam from the target area.

The imaging system 102 includes a camera 104 configured to provide at least two images of at least some portions of a target area at different axes at different locations. The locations may be known locations and orientations. The images from the camera 104 are stereo images to capture features of the target area.

Both the imaging system 102 and Lidar system 112 are electronically and operatively connected to a processor 106 that includes an image processor 108 and a Lidar processor 110. The processor 106 is in electronic communication with a memory 118 and a controller 120. The controller 120 may be coupled to a database 130 in certain embodiments. The images from the imaging system 102 are designed to be captured and the optical beam is designed to be emitted simultaneously. In that respect both the imagining system 102 and Lidar system 112 can be mounted at a fixed position relative to one another for ease of calculation. Any known mounting techniques may be utilized.

FIG. 2 illustrates the apparatus in use 200 to scan a target area 205. Camera 104 is configured to form images at image sensors 214, 224, respectively. The image sensors 214, 224 are from the same camera 104 shown as two separate locations for ease of illustration to represent at least two images taken a distance apart along separate axes. Typical stereo imaging systems are limited to the two images from the imaging system and require the angle between the separate axes to be precisely known to determine the distance to the target area. In contrast, with the use of the single pulse laser beam and the received portion of the beam, the distance to the target area is more easily and quickly determined to a greater accuracy, e.g., where the angle between the separate axis is small. As shown, the laser 220 may be co-aligned with the image sensors 214, 224 to allow the Lidar processor 110 to accurately estimate the range to the target area. In further embodiments, the Lidar system and imaging system can use portions of the same optics systems, isolation systems, and line of sight stabilization and pointing control systems.

The image processor 108 is coupled to receive image data from the image sensors 214, 224 and determine image characteristics such as displacements. The controller 120 processes the images received and controls the laser 220 to emit a single pulse optical beam towards the target 205 and provide range estimates. The controller 120 is coupled to the Lidar system 112 and the camera 104 and identifies the area to be targeted based on the stereoscopic images.

With reference to FIG. 3, the combination of the imaging system for stereo images and the Lidar system are designed to work together as described herein provides more detail and accuracy than is feasible with either system on its own. The stereo imagery covers a larger area and can be configured to have a finer sampling than conventional Lidar.

In situations where power is limited to an occasional single pulse from the Lidar emitter, this pulse is emitted towards the same target area (e.g., target area 205 of FIG. 2) that the imaging system is scanning (e.g., scanning to collect a stereo pair of images). The receiver of the Lidar (e.g., optical detection system 116 of FIG. 1) detects a return and the range is determined. Determination of the range can be performed by a processor such as processor 106. Correlating this location with the location in the stereo images, one can now correct for the error in the stereo pair parallax angle or the baseline positions to match the range obtained from the returned portion of the single pulse laser to correct the range for multiple points, e.g., to all of the pixels, in the stereo image. Using the single pulse of the Lidar sample, the accuracy of the range from the stereo pair images can be improved while also reducing the amount of fore and aft look required from the imaging system to achieve the same accuracy as without the Lidar correction.

A single pulse from a Lidar is feasible when power may be limited, such as from a space borne system, and can provide significant improvement to the range determination when using stereo imaging. The Lidar correction reduces the timeline from stereo pair only images that would require further time separation to gain accuracy. In certain embodiments, the single pulse Lidar correction to stereo imaging range can also be used for airborne or ground based sensors, e.g., with limited power and/or a need to minimize being active to avoid detection and countermeasures.

As shown in FIG. 3, taking a pair of images, 302-1 and 302-2 (e.g., stereo images), that are two adjacent scans that go from 20 NM to 100 NM to the side of the imaging system's track that are collected within seconds of each other. With the laser co-aligned and configured to emit a single pulse optical beam 301 simultaneously with the capturing of the images 302-1 and 302-2, the range to a location, e.g., at 30 NM, can be determined. Correlating this location with the stereo images now corrects for the error in the stereo image parallax angle or the baseline positions to match the range from the Lidar pulse. The samples from the images, schematically indicated as smaller black dots in FIG. 3, are corrected using the Lidar sample, schematically indicated as a larger black dot in FIG. 3, obtained from the single pulse optical beam.

The apparatus can be used on aircraft designed to scan a target area while in motion and also can be used on a ground vehicle or at a ground facility where power is limited. The apparatus can also be used in space borne systems.

Those skilled in the art would appreciate that while shown and described in the exemplary context of space and aircraft based imaging, there are numerous other applications for the systems and methods described herein. For example, the controller 120 can be coupled to a design database (e.g., database 130 of FIG. 1) and can compare laser radar derived target data with design data (and design tolerances) to determine if a scanned surface is acceptable based on design and design tolerances. If desired, the controller 120 can also generate visible images and provide images to a display (e.g., a screen on a computing device or other suitable electronic device), and overlay or juxtapose measured and design information as desired. Imaging systems as described above can also be configured to provide depth estimates in addition to laser radar range measurements, to be used in targeting a laser radar to particular features of interest, or to provide a three dimensional map of a target and a target environment. In addition, the size and location, e.g. the location in the earth centered, earth fixed coordinate system, of objects in the overlapping images can be determined using the systems and methods described herein.

As will be appreciated by one skilled in the art, aspects of the present embodiments may be embodied as a system, method or computer program product. Accordingly, aspects of the present embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described above with reference to flowchart illustrations and/or block diagrams of methods, apparatus (systems) and computer program products according to embodiments of the embodiments. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in a flowchart and/or block diagram block or blocks.

The methods and systems of the present disclosure, as described above and shown in the drawings, provide for an apparatus with superior properties including improved stereo imaging. While the apparatus and methods of the subject disclosure have been shown and described with reference to preferred embodiments, those skilled in the art will readily appreciate that changes and/or modifications may be made thereto without departing from the scope of the subject disclosure.

## Claims

1. An apparatus for determining a distance to a target area, comprising:
at least one imaging system configured to provide at least two images of a target area, wherein the images are associated with different imaging axes for forming a stereo image of the target area; and
a Lidar system including at least one laser configured to direct an optical beam to the target area and an optical detection system configured to receive a portion of the optical beam from the target area and establish a distance to the target area based on the received portion.

2. The apparatus of claim 1, wherein the at least one laser emits a single pulse laser beam to the target area.

3. The apparatus of claim 1 or 2, further comprising:
an image processor coupled to the imaging system and laser system connected to a memory, wherein the memory includes instructions recorded thereon that, when read by the processor, cause the processor to:
receive the at least two images of the target area;
receive the portion of the laser beam from the target area; and
determine an imaging range to multiple points in the target area based on the at least two images and a laser range to the target area based on the received portion of the laser beam.

4. The apparatus of claim 3, wherein the processor is further configured to correlate the imaging range to the multiple points in the target area with the laser range to the target area.

5. The apparatus of claim 4, wherein the processor is further configured to correct one or more errors in a stereo pair parallax angle or baseline positions of the at least two images based on the correlation.

6. The apparatus of any preceding claim, wherein the imaging system includes a camera configured to produce a first image associated with a first axis at a first time and a second image associated with a second axis at a second time.

7. The apparatus of any preceding claim, wherein the Lidar system is co-aligned with the at least one imaging system.

8. The apparatus of any preceding claim, wherein the at least one imaging system and the Lidar system are mounted to a space borne system.

9. A method for determining distance to a target area, comprising
receiving two images of a target area, wherein the two images are taken at different imaging axes for stereo imaging;
directing an optical beam from a Lidar system to the target area;
receiving a portion of the optical beam from the target area to establish an estimate of a target distance based on the received portion to extend the range accuracy of the stereo imaging.

10. The method of claim 9, wherein directing the optical beam includes directing a single pulse optical beam emitted by a laser of the Lidar system.

11. The method of claim 9 or 10, further comprising determining an imaging range to multiple points in the target area based on the at least two images and a laser range to the target area based on the received portion of the optical beam.

12. The method of claim 11, further comprising correlating the imaging range to the multiple points in the target area with the laser range to the target area.

13. The method of claim 12, further comprising correcting one or more errors in a stereo pair parallax angle or baseline positions of the at least two images based on the correlation.
